(19) Europäisches Patentamt
European Patent Office
Office européen des brevets

(11) **EP 3 651 298 B1**

(12) **EUROPÄISCHE PATENTSCHRIFT**

(45) Veröffentlichungstag und Bekanntmachung des Hinweises auf die Patenterteilung:
**24.08.2022 Patentblatt 2022/34**

(21) Anmeldenummer: **18204595.5**

(22) Anmeldetag: **06.11.2018**

(51) Internationale Patentklassifikation (IPC):
***H02J 3/18*** *(2006.01)*    ***H02J 3/38*** *(2006.01)*
***H02J 3/50*** *(2006.01)*

(52) Gemeinsame Patentklassifikation (CPC):
**H02J 3/18; H02J 3/16; H02J 3/381; H02J 3/46; H02J 3/50;** H02J 2300/28; Y02E 40/30

(54) **BLINDLEISTUNGSSTEUERUNG FÜR EIN WECHSELSTROMNETZ**

REACTIVE POWER CONTROL FOR AN ALTERNATING CURRENT NETWORK

COMMANDE DE PUISSANCE RÉACTIVE POUR UN RÉSEAU DE COURANT ALTERNATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.05.2020 Patentblatt 2020/20**

(73) Patentinhaber: **Siemens Aktiengesellschaft 80333 München (DE)**

(72) Erfinder:
• **Mesanovic, Amer 80992 München (DE)**
• **Szabo, Andrei 85521 Ottobrunn (DE)**

(56) Entgegenhaltungen:
**EP-A2- 2 612 414**    **DE-A1-102016 203 123 US-B2- 9 411 389**

EP 3 651 298 B1

**EP 3 651 298 B1**

**Beschreibung**

Zur Steuerung der Blindleistung von Wechselstromnetzen wird oft eine reaktive Statik-Steuerung eingesetzt, auch als Reactive Power Droop Control. Aufgrund der Komplexität der Netze lassen sich die Steuerungsparameter unter Umständen nur ungenügend einstellen, so dass die Blindleistungssteuerung suboptimal erfolgt. Die Dokumente US 9 411 389 B2 und EP 2 612 414 beschreiben Systeme zur Leistungserzeugung mit mehreren Generatoren, in welchen eine reaktive Statik-Steuerung eingesetzt wird.

Es ist eine Aufgabe der vorliegenden Erfindung, eine verbesserte Steuerung von Wechselstromnetzen bereitzustellen. Die Erfindung betrifft insbesondere Mikronetze [Microgrids], mit einem oder mehreren Generatoren und optional einem oder mehreren Verbrauchern.

Erfindungsgemäß ist ein Verfahren zur Steuerung der Blindleistung eines Wechselstromnetzes mit mehreren Generatoren gemäss Anspruch 1 vorgesehen. Für mindestens einen der Generatoren werden Messwerte für Spannungen $<V_{m,i}>$ und Blindleistungen $<Q_{m,i}>$ bereitgestellt, wobei von dem mindestens einen Generator der Generatoren jeder Generator durch Einstellen einer Blindleistung auf einen Einstellpunkt $<Q_{s,i}>$ und einer Spannung auf einen Einstellpunkt $<V_{s,i}>$ einstellbar ist, wobei die Einstellpunkte der Generatoren durch eine Reaktive Droop-Statik-Leistungssteuerung $<V_{m,i}=V_{s,i}-k_{Q,i} (Q_{m,i}-Q_{s,i})$ mit i= l...n> nicht unabhängig voneinander vorgebbar sind. Das Verfahren umfasst das Bestimmen von Einstellpunkten für die Blindleistung und/oder Spannung für den mindestens einen Generator der Generatoren basierend auf einer Abweichung von Messwerten der Blindleistung $<Q_{des,i}>$ von Zielwerten für die Blindleistung $<Q_{des,i}>$, sodass die Messwerte der Blindleistung $<Q_{m,i}>$ zu den Zielwerten der Blindleistung $<Q_{des,i}>$ gesteuert werden können.

Die Messwerte für Spannungen und Leistungen betreffen die Spannungen und Reaktiv-Leistungen einzelner der Generatoren.

Die Messwerte können durch Sensoren bereitgestellt sein und können tatsächliche Blindleistungswerte und/oder Spannungswerte der Generatoren repräsentieren. Die Steuerung durch Einstellpunkte kann eine Statik-Steuerung sein. Es können Einstellpunkte für die Spannungen bestimmt werden. Die Abweichung kann die Differenz zwischen den Werten sein, etwa eine Vektorgröße.

Die Erfindung erlaubt das verbesserte Einstellen der Generatoren, ohne dass die Kenngrößen der Statik der Generatoren und insbesondere die Netzparameter bekannt sein müssen. Durch Zusammenführen der Informationen und Messwerte für die einzelnen Generatoren und die gemeinsame Ansteuerung kann ein effizienter Betrieb erreicht werden.

Die Verschiebung kann durch Berücksichtigung von Beschränkungswerten, wie Spannung $<V_{max}, V_{min}>$ oder Nennleistung, begrenzt sein. Insbesondere kann überprüft werden, ob eine Verschiebung für einzelne Generatoren in einen kritischen Bereich führen kann, und dann eine Verschiebung unterbleiben. Ein kritischer Bereich kann in einer Umgebung um einen Beschränkungswert insbesondere für einen Spannungswert gegeben sein. Die Umgebung kann einen Bereich um den Beschränkungswert definieren. Die Skalierung und/oder die Umgebung können derart gewählt sein, dass eine einzelne Verschiebung in den kritischen Bereich hinein, aber nicht über den Beschränkungswert hinausführen kann.

Die Einstellpunkte für die Blindleistung für einen oder mehrere Generatoren kann auf den gemessenen Werten für die Blindleistung basieren, wobei die gemessenen Werte durch eine Verschiebung $<\Delta Q>$ in Richtung der Zielwerte verschoben werden können.

Die Verschiebung $<\Delta Q>$ kann dabei auf der Abweichung basieren, die mit einem Skalierungsfaktor multipliziert wird.

Die Einstellpunkte können iterativ verschoben werden, beispielsweise mit mehreren Verschiebungen. So kann sich iterativ an eine Ziellösung herangearbeitet werden, ohne dass Beschränkungen verletzt werden.

Zielwerte für die Leistungen $<Q_{des,i}>$ der Generatoren können basierend auf einer Abweichung einer gemessenen Netzleistung $<Q_{PCCm}>$ von einer Ziel-Netzleistung $<Q_{PCCdes}>$ bestimmt werden.

Die Zielwerte für die Leistungen $<Q_{des}>$ können insbesondere basierend auf einer skalierten Abweichung $<\Delta Q_{PCC}>$ bestimmt werden. Die Skalierungen $\varepsilon$, $\alpha$ können unterschiedlich sein.

Ferner ist eine Steuereinrichtung für ein Wechselstromnetz mit mehreren Generatoren vorgesehen. Die Steuereinrichtung ist dazu ausgebildet, ein hierin beschriebenes Verfahren auszuführen und/oder zu steuern.

Die Steuereinrichtung kann dazu ausgebildet sein, Generatoren anzusteuern, indem sie Einstellpunkte der Generatoren für Spannung und Leistung einstellt.

Ferner ist eine Netzeinrichtung mit einem Wechselstromnetz mit mehreren Generatoren und einer hierin beschriebenen Steuereinrichtung vorgesehen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

2

Fig. 1 eine erfindungsgemäße Steuereinrichtung und einen Algorithmus zeigt; und

Fig. 2 bis 5 weitere Aspekte des erfindungsgemäßen Algorithmus zeigen.

Hierin werden die folgenden Formelzeichen verwendet:

X Vektoren

$X_i$ i-te Komponente des Vektors X

$nG$ Anzahl der Generatoren

$V_m$ Vektor der gemessenen Generatorspannungen

$V_s$ Vektor der Spannungseinstellpunkte der Generatoren

$V_{max}$ Vektor der maximalen zugelassenen Generatorspannungen, Beschränkungsvektor

$V_{min}$ Vektor der minimalen zugelassenen Generatorspannungen; Beschränkungsvektor

$V_{prev}$ Vektor der vorhergehenden gemessenen Generatorspannungen

$Q_m$ Vektor gemessener Generator-Reaktivleistungen

$Q_s$ Vektor der Einstellpunkte der Generator- Reaktivleistungen

$Q_{des}$ Vektor der gewünschten Generator-Reaktivleistungen; Zielwerte, Zielleistungen

ur Boolescher Vektor, bei dem die i-te Komponente angibt, ob der Einstellpunkt der Generator-Reaktivleistung aktualisiert werden kann. Aktualisierungsrestriktion ist aktiv, wenn der Wert=WAHR ist.

1 Einheitsvektor (Vektor mit allen Komponenten 1)

$\Delta Q$ Verschiebung

$\Delta Q_v$ Änderung der Reaktivleistung eines Generators, wenn eine Spannungsbeschränkung verletzt ist.

$Q_{PCCdes}$ Gewünschte Reaktivleistung am gemeinsamer Kopplungspunkt (PCC, Point of Common Coupling)

$Q_{PCCm}$ Gemessene Reaktivleistung am PCC

$S_N$ Generator-Nominalleistungen

$\alpha_{PCC}$ Skalierungsfaktor für die Änderung der Reaktivleistung am PCC in einer Iteration

$\varepsilon_Q$ Skalierungsfaktor für die Modifizierung von Reaktivleistungs-Einstellpunkten der Komponenten

$\Delta V_{alert}$ Minimale Spannungsdifferenz von $V_{min}$ zu $V_{max}$, wenn der Spannungsüberwachungsalgorithmus Maßnahmen zur Verhinderung von Verletzungen von Spannungsbeschränkungen aktiviert.

$k_{Q,i}$ Kennwert der Statik für Generator i

$S_{available}$ Summe von Nominalleistungen von Komponenten (Generatoren), die aktualisiert werden können

Reaktive Statik-Leistungssteuerung wird häufig als

$$V_{m,i}=V_{s,i}-k_{Q,i}(Q_{m,i}-Q_{s,i}) \quad (1) \quad \text{formuliert.}$$

In Wechselstromnetzen, insbesondere Microgrids, liegen oft erhebliche Unterschiede zwischen eingestellten und gemessenen Leistungswerten vor, etwa weil die Spannungseinstellwerte unpassend sind. Außerdem sind die genauen Betriebsparameter solcher Netze nicht immer leicht festzustellen, oder gar unbekannt, was die Steuerung erschwert. Dies gilt insbesondere für Leistungsflussberechnungen.

Erfindungsgemäß wird ein Netz mit Generatoren G1, G2, ..., Gn ["$nG$"] betrachtet, die über eine Reaktive Statik-Leistungssteuerung [Reactive Power Droop Control] steuerbar sind. Andere, zusätzliche Generatoren können vorhanden sein. Eine Steuerung eines der Generatoren G1, G2, ..., Gn ["$nG$"] kann über Einstellpunkte für zugeordnete Spannung und Leistung erfolgen mit $<V_{m,i}=V_{s,i}-k_{Q,i}(Q_{m,i}-Q_{s,i})$ mit i= l...n>. Es wird angenommen, dass eine Steuerungseinrichtung 100 vorhanden ist, welcher gemessene Spannungen $<V_m>$ und Reaktivleistungen $<Q_m>$ der Generatoren G1, G2, ..., Gn kommuniziert werden. Die Kommunikation kann relativ langsam erfolgen, etwa indem in regelmäßigen oder unregelmäßigen Abständen entsprechende Messwerte berichtet werden. Dazu kann an jedem der Generatoren G1, G2,..., Gn eine entsprechende Sensorik zugeordnet sein, welche mit der Steuereinrichtung 100 zu kommunizieren vermag. Allgemein kann die Kommunikation schnell genug erfolgen, dass für jeden Iterationsdurchlauf eine aktualisierte Messung vorliegen kann. Es wird ein Ansatz beschrieben, nach welchem iterativ Einstellpunkte $<Q_s>$ und $<V_s>$ von Generatoren angepasst werden, um die gewünschten Reaktivleistungen von Generatoren und/oder des Microgrids am PCC einzustellen. Dabei werden Spannungsbeschränkungen nicht verletzt, und die Werte der Leistungs-Gains werden nicht verändert. Es können zusätzliche Beschränkungen vorgegeben und berücksichtigt werden, etwa hinsichtlich der Generatorleistungen.

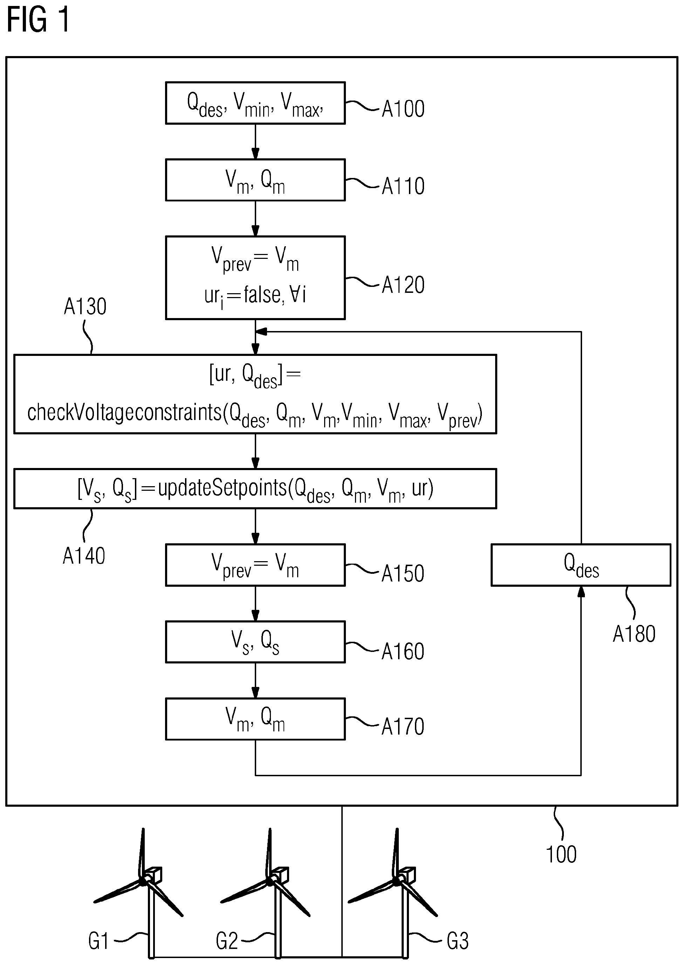

Fig. 1 zeigt eine beispielhafte Steuereinrichtung 100, welche mit den Generatoren G1, G2,..., Gn kommuniziert und dazu ausgebildet ist, ein Verfahren 200 auszuführen, der hierin als Algorithmus angegeben ist und der eine Anzahl Aktionen umfassen kann, die im Folgenden mit Bezugszeichen mit führendem ,A' angegeben sind.

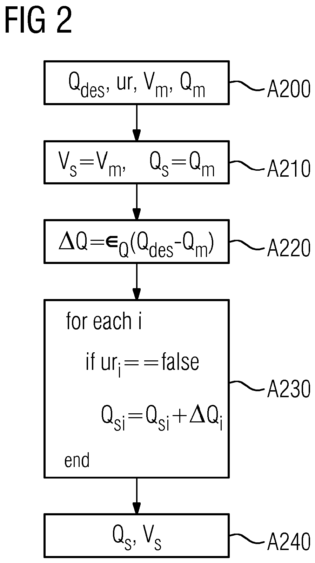

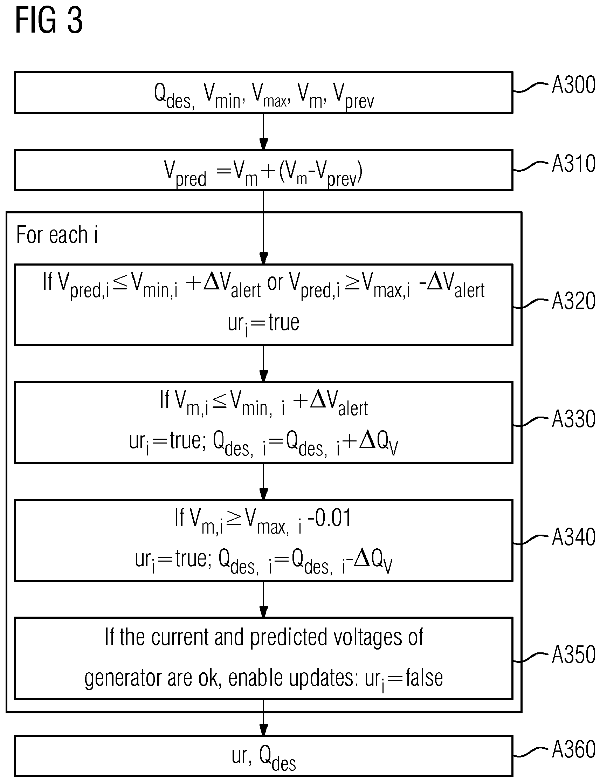

In einer Aktion A100 werden gewünschte Leistungen und Spannungsbeschränkungen festgelegt, und/oder weitere Betriebsbeschränkungen. Dies kann bei Inbetriebnahme erfolgen, oder in Reaktion auf Bedarfsänderungen. In einer Aktion A110 werden gemessene Werte für Reaktivleistung und Spannung der Generatoren erhalten, beispielsweise von den Generatoren zugeordneten Sensoren. In einer Initialisierung in einer Aktion A120 wird $<V_{prev}=V_m>$ gesetzt, und der Bool'sche Vektor für alle Generatoren $<i=l...n>$ auf "FALSCH" gesetzt. Mit Einstieg in die Iterationsschleife bei einer Aktion A130 wird überprüft, ob Beschränkungen verletzt sind, und $<ur>$ wird entsprechend aktualisiert. Dazu kann ein Algorithmus wie in Fig. 3 gezeigt verwendet werden. In einer Aktion A140 werden die Einstellpunkte für Spannungen und Reaktivleistungen aktualisiert. Dazu kann ein Algorithmus wie in Fig. 2 gezeigt verwendet werden. Die Aktionen A130 und A140 können optional vertauscht werden, gegebenenfalls mit leichten Änderungen, beispielsweise bei Parameterübergabe.

In einer Aktion A150 wird der Wert $<V_{prev}=V_m>$ gesetzt. In einer Aktion A160 werden Indikationen von Einstellpunkten $<V_s>$, $<Vm>$ an die jeweiligen Generatoren übermittelt. Beispielsweise können die Einstellpunkte direkt angegeben sein, oder über eine Angabe oder Parametrisierung, welche den Einstellpunkten entspricht. Jedem Generator wird zumindest eine Indikation der ihn betreffenden Einstellpunkte übermittelt. Die Generatoren können in Antwort auf die Indikation die Einstellpunkte einstellen.

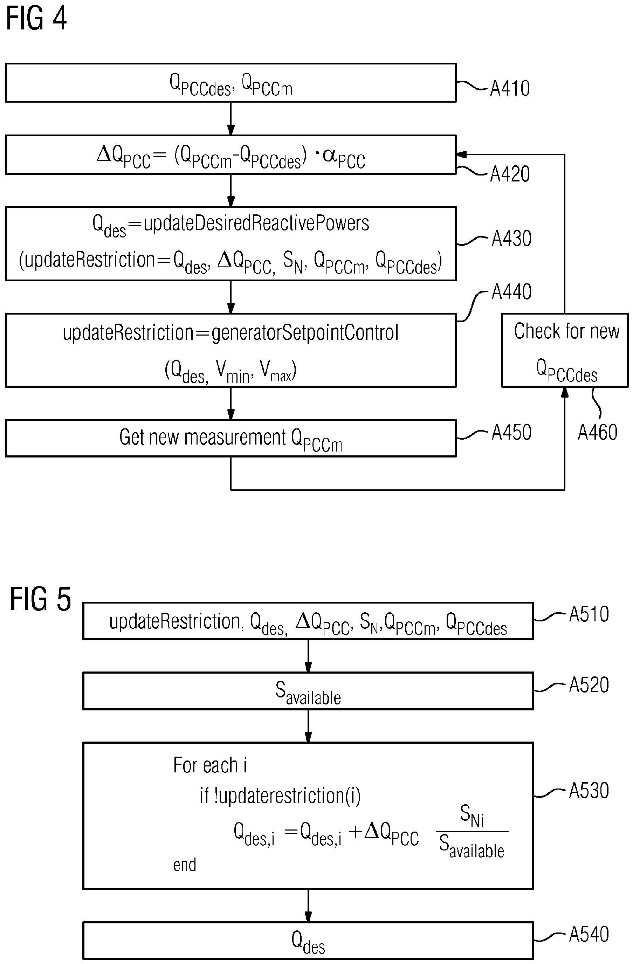

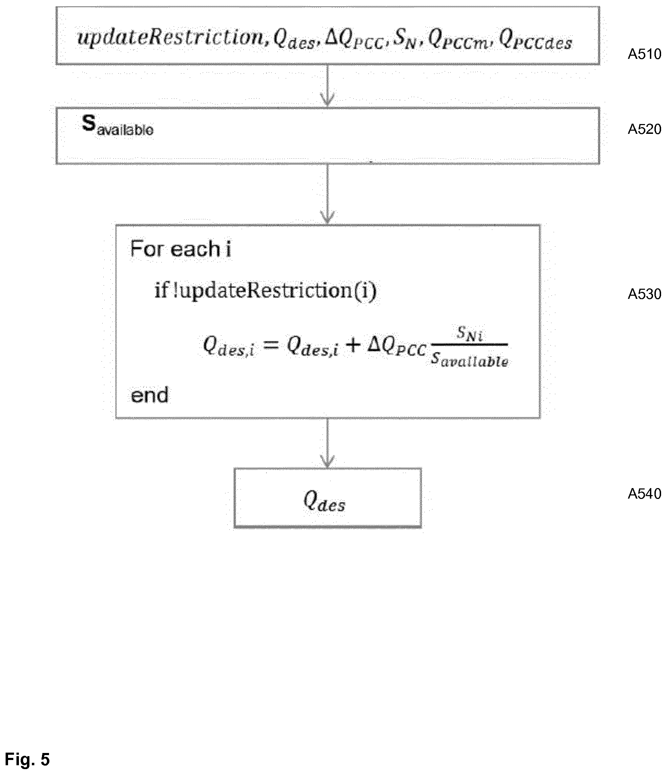

In einer Aktion A170 werden neue Messwerte $<Vm>$, $<Qm>$, erhalten. Dann wird über eine Aktion A180 zurück zur Aktion A130 verzweigt, wobei in einer Aktion A180 überprüft werden kann, ob neue Wunschwerte (Zielwerte) vorliegen. Dazu kann beispielsweise ein Algorithmus wie in Fig. 5 gezeigt zum Einsatz kommen. Die Aktionen A180 und A170 können vertauscht sein, oder es kann von der Aktion A180 zur Aktion A100 zurückverzweigt werden, etwa bei erheblichen Änderungen der Betriebsumstände.

In Fig. 2 wird ein mögliches Beispiel gezeigt, wie neue Einstellpunkte bestimmt werden. Dazu werden für eine Aktion A200 der Bool'sche Vektor, die Wunschleistungen, und die gemessenen Werte für die Spannungen und Leistungen übergeben. In einer Aktion A210 werden die Einstellpunkte mit den gemessenen Werten gleichgesetzt. In einer Aktion A220 werden die Einstellpunkte für die Leistungen $<Q_{s,i}>$ aktualisiert, indem basierend auf dem Unterscheid zwischen der jeweiligen Wunschleistung des Generators und der gemessenen Leistung ein Verschiebungsvektor bestimmt wird $<Q_{des}-Q_m>$, der mit einem geeigneten Skalierungsfaktor $\varepsilon_Q$ skaliert wird. Man erhält gemäß der Aktion A220 eine Verschiebung $<\Delta Q>$. Für jeden Generator, für den gemäß $<ur>$ eine Änderung zulässig ist, wird dann der Einstellwert der Leistung um die entsprechende Komponente des Verschiebungsvektors geändert. Als Ergebnis sind dann in einer Aktion A240 die neuen Einstellwerte $<Q_s>$, $<V_s>$ bereitgestellt. Alternativ kann nur einer der Einstellwertvektoren bereitgestellt werden, etwa wenn die Kennwerte $<k_{Q,i}>$ bekannt sind.

Fig. 3 zeigt ein Beispiel für einen Algorithmus zur Überwachung der Generatorspannungen und/oder zur Überprüfung, ob sich Werte in einem kritischen oder potentiell kritischen Bereich befinden. Insbesondere kann der Vektors $<ur>$ eingestellt werden. Dieser Ansatz kann basierend auf anderen Beschränkungen erweitert werden, etwa indem bei mehreren Beschränkungen pro Generator die zugehörige Komponente auf "WAHR" gesetzt wird, wenn eine oder mehrere Beschränkungen verletzt sind. In einer Aktion A300 werden Parameter übergeben wie aufgeführt.

In einer optionalen Aktion A310 wird eine Hilfsvariable als Vorhersagewert definiert, welche eine Vorhersage für einen möglichen neuen Einstellwertvektor liefert. Dann werden für jeden Generator "i" Aktionen A320-A350 durchlaufen. In der Aktion A320 wird dann, wenn der vorhergesagte Wert in einen kritischen Bereich fällt, etwa zu hohe Spannung oder zu niedrige Spannung, eine Aktualisierung des Generators untersagt, etwa indem die zugehörige Komponente für <ur> auf "WAHR" gesetzt wird "true=WAHR". In Aktionen A330 und A340 wird optional analog für aktuelle gemessene Werte überprüft und gegebenenfalls eine Zielwertänderung durchgeführt. Die angegebenen Parameterwerte sind beispielhaft und können je nach Anwendung angepasst werden.

In der Aktion A350 kann optional für <ur> für alle zugelassenen Komponenten auf "FALSCH [false]" gesetzt werden. Je nach Behandlung der Variablen im Programmfluss kann dies unnötig sein. In einer Aktion A360 können gegebenenfalls aktualisierte <ur> und/oder $<Q_{des}>$ übergeben werden.

Fig. 4 zeigt einen Algorithmus zum iterativen Einstellen, beispielsweise Erhöhen oder Erniedrigen, der Leistung am PCC. Dazu werden iterativ die Reaktivleistungen der Generatoren erhöht oder erniedrigt. Ausgehend von einer Aktion A410 von einem Zielwert $<Q_{PCCdes}>$ und einem gemessenen Wert $<Q_{PCCm}>$, wird in einer Aktion A420 ein Verschiebungswert $<\Delta Q_{PCC}>$ bestimmt.

Dieser wird durch die skalierte Differenz zwischen dem gewünschten und dem gemessenen Wert bestimmt. In einer Aktion A430 wird der Vektor der Generatorwunschleistungen $<Q_{des}>$ basierend auf dem Verschiebungswert aktualisiert. Dazu kann etwa ein Algorithmus wie in Fig. 5 verwendet werden. In einer Aktion A440 werden dann neue Einstellpunkte für die Generatoren bestimmt, etwa durch die Algorithmen der Fig. 2 und Fig. 3. In einer Aktion A450 wird ein neuer Messwert für $<Q_{PCCm}>$ bestimmt, bevor über eine Aktion A460 zur Aktion A420 zurückverzweigt wird. In einer Aktion A460 kann überprüft werden, ob ein neuer Zielwert für $<Q_{PCCdes}>$ vorliegt.

Fig. 5 zeigt einen beispielhaften Algorithmus, in dem die Reaktivleistung am PCC über die Generatoren verteilt wird. Im Beispiel wird eine Verteilung proportional zur Nominalleistung vorgenommen, es sind aber auch andere Ansätze denkbar. In einer Aktion A510 wird der Algorithmus mit den aufgeführten Parametern gestartet. In einer Aktion A520 wird die verfügbare Leistung $<S_{available}>$ bestimmt. In einer Aktion A530 werden Änderungen der Zielleistungen für verfügbare Generatoren bestimmt, basierend auf dem Verschiebungswert für die Leistung am PCC. Als Ergebnis wird in einer Aktion A540 der neue Zielwertvektor $<Q_{des}>$ bereitgestellt.

Die hierin beschriebenen Algorithmen sind beispielhaft und dienen der Erläuterung. Es versteht sich, dass einzelne Aktionen zusammengelegt und/oder mit mathematisch äquivalenten Formulierungen durchgeführt werden können, oder angemessene Abwandlungen eingeführt werden können.

Eine Steuereinrichtung kann eine oder mehrere Bearbeitungseinrichtungen umfassen. Eine Bearbeitungseinrichtung kann allgemein Bearbeitungslogik, und/oder Bearbeitungsschaltungen, und/oder Speicher aufweisen, welche betreibbar sind, um die Informationen bereitzustellen und/oder auszuführen. Es kann vorgesehen sein, dass die Bearbeitungseinrichtung ein einzelnes System oder ein verteiltes System repräsentiert, etwa einen oder mehrere Computer, und/oder als Cloud-System implementiert ist. Eine Bearbeitungslogik kann eine integrierte Schaltung und/oder eine oder mehrere Prozessoren und/oder Kontroller und/oder ASICs [Application Specific Integrated Circuitry, Anwendungsspezifische integrierte Schaltung] oder ähnliche Logiken oder Schaltungen umfassen. Ein Speicher oder eine Speichereinrichtung, auch als Speichermedium bezeichnet, kann volatile oder nicht-volatile Speicher umfassen, etwa RAM [Random Access Memory] und/oder optischen Speicher und/oder magnetischen Speicher und/oder Flash und/oder NAND [Not AND] Speicher, usw. Es kann allgemein ein Speichermedium vorgesehen sein, welches Instruktionen speichert, die dazu geeignet sind, eine Bearbeitungseinrichtung dazu zu bringen, das hierin beschrieben Verfahren auszuführen. Das Speichermedium kann insbesondere ein nichtflüchtiges und/oder nicht-transitorisches Medium sein. Es ist ein Computerprogramm beschrieben, welches derartige Instruktionen aufweist. Das Computerprogramm kann Module aufweisen, um die Algorithmen und/oder Aktionen der Algorithmen auszuführen.

Die beschriebenen Algorithmen können separat implementiert sein, oder als Teile eines umfassenderen Algorithmus implementiert sein.

Obwohl die Erfindung im Detail durch das bevorzugte Ausführungsbeispiel näher illustriert und beschrieben wurde, so ist die Erfindung nicht durch die offenbarten Beispiele eingeschränkt.

**Patentansprüche**

1. Verfahren (200) zur Blindleistungssteuerung eines Wechselstromnetzes mit mehreren Generatoren (G1,..., Gn), wobei von mindestens einem einen Generator der Generatoren (G1,..., Gn) individuelle Messwerte für Spannungen $<V_{m,i}>$ und Leistungen $<Q_{m,i}>$ bereitgestellt werden, wobei von dem mindestens einen Generator der Generatoren (G1,..., Gn) jeder Generator durch Einstellen einer Blindleistung auf einen Einstellpunkt $<Q_{s,i}>$ und einer Spannung auf einen Einstellpunkt $<V_{s,i}>$ individuell einstellbar ist, wobei diese Einstellpunkte durch eine Reaktive Droop-Statik-Leistungssteuerung, formuliert als $<V_{m,i}=V_{s,i}-k_{Q,i} (Q_{m,i}-Q_{s,i})$ mit i= l...n>, nicht unabhängig voneinander vorgebbar sind, wobei $k_{Qi}$ ein generatorspezifischer Statik-Kennwert ist, mit folgendem Merkmal:
Bestimmen von Einstellpunkten für die Blindleistung und/oder Spannung für den mindestens einen Generator der Generatoren (G1,..., Gn) basierend auf einer Abweichung von Messwerten der Blindleistung $<Q_{m,i}>$ von Zielwerten für die Blindleistung $<Q_{des,i}>$, sodass die Messwerte der Blindleistung $<Q_{m,i}>$ zu den Zielwerten der Blindleistung $<Q_{des,i}>$ gesteuert werden.

2. Verfahren (200) nach Anspruch 1, wobei eine Verschiebung $<\Delta Q>$ durch Berücksichtigung von Beschränkungswerten, wie Spannung $<V_{max}, V_{min}>$ oder Nennleistung, begrenzt ist.

3. Verfahren (200) nach Anspruch 1 oder 2, wobei die Einstellpunkte für die Leistung für den mindestens einen Generator der Generatoren (G1,..., Gn) auf den gemessenen Werten für die Leistung basiert, wobei die gemessenen Werte durch die Verschiebung $<\Delta Q>$ in Richtung der Zielwerte verschoben werden.

4. Verfahren (200) nach einem der vorangehenden Ansprüche, wobei die Verschiebung $<\Delta Q>$ auf der Abweichung basiert, die mit einem Skalierungsfaktor multipliziert wird.

5. Verfahren (200) nach einem der vorangehenden Ansprüche, wobei die Einstellpunkte iterativ verschoben werden.

6. Verfahren (200) nach einem der vorangehenden Ansprüche, wobei Zielwerte für die Leistungen $<Q_{des,i}>$ der Generatoren (G1,..., Gn) basierend auf einer Abweichung einer gemessenen Netzleistung $<Q_{PCCm}>$ von einer Ziel-Netzleistung $<Q_{PCCdes}>$ bestimmt wird.

7. Verfahren (200) nach Anspruch 6, wobei die Zielwerte für die Leistungen $<Q_{des,i}>$ basierend auf einer skalierten Abweichung $<\Delta Q_{PCC}>$ bestimmt werden.

8. Verfahren (200) nach Anspruch 7, wobei die Skalierungen unterschiedlich sind.

9. Steuereinrichtung (100) für ein Wechselstromnetz mit mehreren Generatoren (G1,..., Gn), wobei die Steuereinrichtung dazu ausgebildet ist, ein Verfahren (200) nach einem der Ansprüche 1 bis 8 auszuführen und/oder zu steuern.

10. Steuereinrichtung (100) nach Anspruch 9, wobei die Steuereinrichtung (100) dazu ausgebildet ist, die Generatoren (G1,..., Gn) anzusteuern, indem sie Einstellpunkte der Generatoren (G1,..., Gn) für Spannung und Leistung einstellt.

11. Netzeinrichtung mit einem Wechselstromnetz mit mehreren Generatoren (G1,..., Gn) und einer Steuereinrichtung (100) nach Anspruch 9 oder 10.

**Claims**

1. Method (200) for controlling the reactive power of an AC grid comprising a plurality of generators (G1,..., Gn), wherein individual measured values for voltages $<V_{m,i}>$ and powers $<Q_{m,i}>$ are provided by at least one generator of the generators (G1,..., Gn), wherein, of the at least one generator of the generators (G1,..., Gn), each generator can be set individually by setting a reactive power to a setpoint $<Q_{s,i}>$ and a voltage to a setpoint $<V_{s,i}>$, wherein these setpoints cannot be predetermined independently of one another by reactive power droop control, expressed as $<V_{m,i}=V_{s,i}-k_{Q,i}(Q_{m,i}-Q_{s,i})$, where i = 1...n>, wherein $k_{Qi}$ is a generator-specific droop characteristic value, comprising the following feature:

determining setpoints for the reactive power and/or voltage for the at least one generator of the generators (G1,..., Gn) on the basis of a deviation of measured values of the reactive power $<Q_{m,i}>$ from target values for the reactive power $<Q_{des,i}>$, with the result that the measured values of the reactive power $<Q_{m,i}>$ are controlled to the target values of the reactive power $<Q_{des,i}>$.

2. Method (200) according to Claim 1, wherein a shift $<\Delta Q>$ is limited by taking into account limiting values such as voltage $<V_{max}, V_{min}>$ or nominal power.

3. Method (200) according to Claim 1 or 2, wherein the setpoints for the power for the at least one generator of the generators (G1,..., Gn) are based on the measured values for the power, wherein the measured values are shifted by the shift $<\Delta Q>$ in the direction of the target values.

4. Method (200) according to one of the preceding claims, wherein the shift $<\Delta Q>$ is based on the deviation that is multiplied by a scaling factor.

**5.** Method (200) according to one of the preceding claims, wherein the setpoints are shifted iteratively.

**6.** Method (200) according to one of the preceding claims, wherein target values for the powers $<Q_{des,i}>$ of the generators (G1,..., Gn) are determined on the basis of a deviation of a measured grid power $<Q_{PCCm}>$ from a target grid power $<Q_{PCCdes}>$.

**7.** Method (200) according to Claim 6, wherein the target values for the powers $<Q_{des,i}>$ are determined on the basis of a scaled deviation $<\Delta Q_{PCC}>$.

**8.** Method (200) according to Claim 7, wherein the scales are different.

**9.** Control device (100) for an AC grid comprising a plurality of generators (G1,..., Gn), wherein the control device is designed to carry out and/or to control a method (200) according to one of Claims 1 to 8.

**10.** Control device (100) according to Claim 9, wherein the control device (100) is designed to actuate the generators (G1,..., Gn) by said control device setting setpoints of the generators (G1,..., Gn) for voltage and power.

**11.** Grid device comprising an AC grid comprising a plurality of generators (G1,..., Gn) and a control device (100) according to Claim 9 or 10.

**Revendications**

**1.** Procédé (200) pour la commande de puissance réactive d'un réseau de courant alternatif comprenant plusieurs générateurs (G1, ..., Gn), dans lequel au moins un générateur des générateurs (G1, ..., Gn) fournit des valeurs de mesure individuelles pour des tensions $<V_{m,i}>$ et des puissances $<Q_{m,i}>$, dans lequel chaque générateur peut être réglé individuellement par l'au moins un générateur des générateurs (G1, ..., Gn) en réglant une puissance réactive sur un point de réglage $<Q_{s,i}>$ et une tension sur un point de réglage $<V_{s,i}>$, dans lequel ces points de réglage peuvent être prédéfinis de manière non indépendante entre eux par une commande de puissance de statisme réactive, formulée en tant que $<V_{m,i}>=V_{s,i}-k_{Q,i} (Q_{m,i}-Q_{s,i})$ avec i = 1...n >, dans lequel $k_{Q,i}$ est une valeur nominale de statique spécifique au générateur, avec la caractéristique suivante :
détermination de points de réglage pour la puissance réactive et/ou la tension pour l'au moins un générateur des générateurs (G1, ..., Gn) en se basant sur un écart de valeurs de mesure de la puissance réactive $<Q_{m,i}>$ par rapport à des valeurs cibles pour la puissance réactive $<Q_{des,i}>$, de sorte que les valeurs de mesure de la puissance réactive $<Q_{m,i}>$ soient commandées par rapport aux valeurs cibles de la puissance réactive $<Q_{des,i}>$.

**2.** Procédé (200) selon la revendication 1, dans lequel un décalage $<\Delta Q>$ est délimité en tenant compte de valeurs de limitation comme la tension $<V_{max}, V_{min}>$ ou la puissance nominale.

**3.** Procédé (200) selon la revendication 1 ou 2, dans lequel les points de réglage pour la puissance pour l'au moins un générateur des générateurs (G1, ..., Gn) sont basés sur les valeurs mesurées pour la puissance, dans lequel les valeurs mesurées sont décalées par le décalage $<\Delta Q>$ en direction des valeurs cibles.

**4.** Procédé (200) selon l'une des revendications précédentes, dans lequel le décalage $<\Delta Q>$ est basé sur l'écart qui est multiplié par un facteur de redimensionnement.

**5.** Procédé (200) selon l'une des revendications précédentes, dans lequel les points de réglage sont décalés de manière itérative.

**6.** Procédé (200) selon l'une des revendications précédentes, dans lequel des valeurs cible pour les puissances $<Q_{des,i}>$ des générateurs (G1, ..., Gn) sont déterminées en se basant sur un écart d'une puissance de réseau mesurée $<Q_{PCCm}>$ par rapport à une puissance de réseau cible $<Q_{PCCdes}>$.

**7.** Procédé (200) selon la revendication 6, dans lequel les valeurs cibles pour les puissances $<Q_{des,i}>$ sont déterminées en se basant sur un écart redimensionné $<\Delta Q_{PCC}>$.

**8.** Procédé (200) selon la revendication 7, dans lequel les redimensionnements sont différents.

9. Dispositif de commande (100) pour un réseau de courant alternatif comprenant plusieurs générateurs (G1, ..., Gn), dans lequel le dispositif de commande est conçu pour exécuter et/ou commander un procédé (200) selon l'une des revendications 1 à 8.

10. Dispositif de commande (100) selon la revendication 9, dans lequel le dispositif de commande (100) est conçu pour commander les générateurs (G1, ..., Gn) en ce qu'il règle des points de réglage des générateurs (G1, ..., Gn), pour la tension et la puissance.

11. Dispositif de réseau comprenant un réseau de courant alternatif comprenant plusieurs générateurs (G1, ..., Gn) et un dispositif de commande (100) selon la revendication 9 ou 10.

# FIG 1

$Q_{des}, V_{min}, V_{max},$ — A100

$V_m, Q_m$ — A110

$V_{prev} = V_m$
$ur_i = false, \forall i$ — A120

A130

$[ur, Q_{des}] =$
checkVoltageconstraints$(Q_{des}, Q_m, V_m, V_{min}, V_{max}, V_{prev})$

$[V_s, Q_s] = updateSetpoints(Q_{des}, Q_m, V_m, ur)$

A140

$V_{prev} = V_m$ — A150

$V_s, Q_s$ — A160

$V_m, Q_m$ — A170

$Q_{des}$

A180

100

G1   G2   G3

# FIG 2

$$Q_{des}, \, ur, \, V_m, \, Q_m \quad \text{—A200}$$

$$V_s = V_m, \quad Q_s = Q_m \quad \text{—A210}$$

$$\Delta Q = \epsilon_Q (Q_{des} - Q_m) \quad \text{—A220}$$

for each i

    if $ur_i == false$

        $Q_{si} = Q_{si} + \Delta Q_i$

end

    —A230

$$Q_s, \, V_s \quad \text{—A240}$$

# FIG 3

$$Q_{des,}\ V_{min},\ V_{max},\ V_{m},\ V_{prev} \qquad \text{A300}$$

$$V_{pred} = V_{m} + (V_{m} - V_{prev}) \qquad \text{A310}$$

For each i

$$\text{If } V_{pred,i} \leq V_{min,i} + \Delta V_{alert} \text{ or } V_{pred,i} \geq V_{max,i} - \Delta V_{alert}$$
$$ur_{i} = true \qquad \text{A320}$$

$$\text{If } V_{m,i} \leq V_{min,\ i} + \Delta V_{alert}$$
$$ur_{i} = true; \ Q_{des,\ i} = Q_{des,\ i} + \Delta Q_{V} \qquad \text{A330}$$

$$\text{If } V_{m,i} \geq V_{max,\ i} - 0.01$$
$$ur_{i} = true; \ Q_{des,\ i} = Q_{des,\ i} - \Delta Q_{V} \qquad \text{A340}$$

If the current and predicted voltages of
generator are ok, enable updates: $ur_{i} = false$ \qquad A350

$$ur, Q_{des} \qquad \text{A360}$$

## FIG 4

| $Q_{PCCdes}, Q_{PCCm}$ | A410 |

$$\Delta Q_{PCC} = (Q_{PCCm} - Q_{PCCdes}) \cdot \alpha_{PCC}$$ A420

$Q_{des}$ = updateDesiredReactivePowers
(updateRestriction = $Q_{des}$, $\Delta Q_{PCC}$, $S_N$, $Q_{PCCm}$, $Q_{PCCdes}$) A430

updateRestriction = generatorSetpointControl
($Q_{des}$, $V_{min}$, $V_{max}$) A440

Check for new $Q_{PCCdes}$

Get new measurement $Q_{PCCm}$ A450

A460

## FIG 5

| updateRestriction, $Q_{des}$, $\Delta Q_{PCC}$, $S_N$, $Q_{PCCm}$, $Q_{PCCdes}$ | A510 |

| $S_{available}$ | A520 |

For each i
  if !updaterestriction(i)
$$Q_{des,i} = Q_{des,i} + \Delta Q_{PCC} \frac{S_{Ni}}{S_{available}}$$
end

A530

| $Q_{des}$ | A540 |

$$updateRestriction, Q_{des}, \Delta Q_{PCC}, S_N, Q_{PCCm}, Q_{PCCdes}$$

A510

$$\mathbf{S}_{available}$$

A520

For each i

    if !updateRestriction(i)

$$Q_{des,i} = Q_{des,i} + \Delta Q_{PCC} \frac{S_{Ni}}{S_{available}}$$

end

A530

$$Q_{des}$$

A540

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9411389 B2

- EP 2612414 A